Europäisches Patentamt

European Patent Office

Office européen des brevets

(11) Publication number: **0 310 223**
**A1**

## EUROPEAN PATENT APPLICATION

(21) Application number: **88306823.1**

(22) Date of filing: **25.07.88**

(51) Int. Cl.4: **H01F 1/10**

(30) Priority: **27.07.87 GB 8717711**
**27.07.87 GB 8717712**

(43) Date of publication of application:
**05.04.89 Bulletin 89/14**

(84) Designated Contracting States:
**AT BE CH DE ES FR GB GR IT LI LU NL SE**

(71) Applicant: **MAGHEMITE INC.**
**1900-999 West Hastings Street**
**Vancouver British Columbia V6C 2W2(CA)**

(72) Inventor: **Cavanach,Patrick Edward**
**95 Balmoral Avenue**
**Toronto,Ontario(CA)**

(74) Representative: **Burford, Anthony Frederick et al**
**W.H. Beck, Greener & Co. 7 Stone Buildings**
**Lincoln's Inn**
**London WC2A 3SZ(GB)**

(54) Magnet composition.

(57) A novel magnet composition is described which is able to have its polarity reversed by the application of a strong magnetic field thereto while, at the same time, upon removal of the reversing field, the original polarity is restored without loss of field strength and hence without demagnetization. The novel magnets are useful in electric motors. The novel magnet composition preferably comprises strontium chromium ferrite having an octagonal corundum-type crystal lattice distributed in a matrix of the hexagonal spinel-type crystal lattice of strontium hexaferrite.

EP 0 310 223 A1

## MAGNET COMPOSITION

### FIELD OF INVENTION

The present invention relates to novel magnet compositions and to the use of such magnet compositions in novel switching mechanisms for controlling dynamoelectric machines.

### BACKGROUND TO THE INVENTION

Ferrites are well known as magnetic materials, particularly strontium hexaferrite. We have found that by incorporating small amounts of other oxides into the ferrite, a novel magnet composition is provided having useful properties not previously observed in magnetic materials.

A search of the prior art with respect to the magnet composition aspect of the present invention has been conducted at the U.S. Patent and Trademark Office and the following U.S. patents have been noted as the most relevant:

| | | | |
|---|---|---|---|
| 2,762,778 | 2,828,264 | 2,886,530 | 2,962,444 |
| 2,980,617 | 3,113,927 | 3,509,057 | 3,896,216 |
| 4,025,449 | 4,062,922 | 4,407,721 | 4,565,726 |

These prior art patents can be divided into two groups, namely those dealing with soft ferrites and those dealing with hard ferrites, as follows:

| Soft Ferrites | Hard Ferrites |
|---|---|
| 2,886,530 | 2,762,778 |
| 2,962,444 | 2,828,264 |
| 3,509,057 | 2,980,617 |
| 3,896,216 | 3,113,927 |
| 4,407,721 | 4,025,449 |
| 4,565,726 | 4,062,922 |

The soft ferrite patents are concerned with materials used in electronic and other applications where they are required to become magnetized by a field but to lose the magnetism when the field is removed. The residual magnetism (Br) is required to be very low and approaching zero and the coercive force (Hci) also is very low compared to permanent magnets. Small amounts of additives, including chromium oxide, are used as dopants to modify some of the properties.

The hard ferrite patents deal with permanent magnets. In all the references except for U.S. 2,828,264, chromium oxide is mentioned as a dopant to improve the resistance to demagnetism (intrinsic coercive force Hci). In ferrite permanent magnets, the highest levels of permanent magnetism are obtained when all the internal magnetic domains are aligned one with another. If the strength or direction of an external magnetic field is changed, then the internal domains can be caused to change shape or polarity. In order for this to happen, the domain walls must move through the material and such movement is hindered by small inclusions and impurities.

The intristic coercive force (Hci) required to demagnetize a permanent magnet is increased if properly sized and distributed fine particles are included in the structure and silica, alumina and titania are commonly used for this purpose and chromium oxide is sometimes used in the same way.

U.S. Patent No. 3,828,264 describes the use of chromium oxide to improve the properties of ferrite permanent magnets when they are used to store and recover energy by applying a demagnetizing field in the second quadrant of the hysteresis loop. Chromium oxide addition to give a ratio of iron to chromium in the magnet of between 4 and 20 is said to improve the magnetic quality of the magnet significantly, with figures of 1800 Br and 3200 Hci being achieved.

The novel magnet composition of the invention is useful in providing switching mechanisms in dynamoelectric machines.

Permanent magnet direct current motors are known, for example, as described in our U.S. Patent No. 4,605,874. One of the problems of such motors and also with direct current electromagnetic motors is the difficulty of devising control circuits which are able to cope with the very large transient currents and magnetic fields which are generated when the motor magnetic field is switched through zero by electronic or mechanical switches.

A search of the prior art with respect to the permanent magnet motor aspect of the present invention has been conducted at the U.S. Patent and Trademark Office and the following U.S. patent have been noted as the most relevant:

| 1,077,179 | 1,666,065 | 1,724,446 | 1,859,643 |
| 1,863,294 | 3,089,064 | 3,146,381 | 3,316,514 |
| 3,428,867 | 3,670,189 | 3,740,683 | 3,979,652 |
| 4,064,442 | 4,409,576 | | |

These references in general show the use of electrical coils in association with permanent magnets to vary the magnetic field of permanent magnets for a variety of purposes.

## SUMMARY OF INVENTION

In accordance with one aspect of the present invention, there is provided a novel magnet composition comprising strontium hexaferrite having a strontium metal ferrite disposed therein. The novel composition of the invention contains sufficient quantity of the strontium metal ferrite distributed therein to permit reversal of the polarity thereof upon application of a sufficiently strong magnetic field thereto and restoration of the same polarity without any significant loss of field strength upon removal of said magnetic field.

The invention is described herein with respect to strontium hexaferrite having incorporated therein small quantities of strontium chromium ferrite but it will be understood that the invention is concerned broadly with the incorporation of small amounts of oxides in magnetizable ferrites which have an equivalent effect to that obtained when chromium oxide is incorporated in strontium hexaferrite, such as other trivalent metal oxides.

In one preferred embodiment of the invention, by incorporating from about 2 to about 6 wt.% of chromium oxide ($Cr_2O_3$) to conventional strontium hexaferrite material to provide strontium chromium ferrite therein, there results a magnet which has a significantly higher resistance to demagnetization than conventional ferrite magnets.

The higher resistance to demagnetization makes it possible to operate the magnets at a much higher magnetic "stress" without damage to the magnet and,therefore, to store and recover more energy from the same volume and weight of ferrite magnet.

In addition, the novel magnets can be forced by a demagnetization field to zero magnetization and beyond. At the zero point, the magnet reverses polarity. When the stress of the demagnetization field is removed, the magnet rebounds to its original state, if the "magnetic elastic limit" of the magnet has not been exceeded.

The novel magnet may be operated so that it acts as a switch in a motor or in an electrical or magnetic circuit. In addition, if a switching magnet made from the new magnet material is held at the zero magnetization point, an extremely sensitive amplification of signals received from a variety of sources, including thermocouples, Hall switches and optical switches, can be provided.

The switching magnet may be held at zero magnetization by providing a very strong permanent magnet which is positioned to provide zero magnetization in the switching magnet.

In some cases, the "holding" magnet may be mounted so that it may move if mechanically disturbed. Movement of the holding magnet in one direction may enable the switching magnet to become north pole magnetized, while movement of the holding magnet in the other direction causes the switching magnet to become south pole magnetized.

A very steeply sloping BH line crossing the zero magnetization point for the switching magnet can produce a signal which is a large multiplication of the actual mechanical movement of the holding magnet.

In similar manner, the small electrical signals from thermocouples, for example, may be used to excite an electromagnetic coil around the switching magnet, so that it is magnetized either north pole or south pole in accordance with the increase or decrease in the voltage signal from the thermocouple.

In another aspect of the present invention, permanent magnet switches formed of the novel magnetic material are used instead of electronic or mechanical switches to effect switching in electromagnetically driven or pulsed motors. This aspect of the present invention has broad application to direct current motors, both permanent magnet and electromagnet. This aspect of the invention is described particularly with respect to permanent magnet motors but it will be understood that the principles of the invention are broadly applicable.

Accordingly, in this aspect of the invention, there is provided an electric motor, comprising a plurality of permanent magnets of fixed polarity mounted on one of a rotor or stator and plurality of permanent magnets of a reversible polarity mounted on the other of a rotor or stator and arranged to interact with the fixed polarity permanent magnets to achieve rotational movement of the rotor with respect to the stator by alternate attraction and repulsion of the permanent magnets of fixed polarity and those of reversible polarity.

Permanent magnet motor usually have the permanent magnets of fixed polarity mounted on a rotor while d.c. power electromagnetically-generated poles of reversible polarity are provided on the stator, usually by providing coils with steel cores. The polarity of the poles on the stator is switched by suitable switching devices as required by the location of the poles of the rotor relative thereto to provide rotation of the rotor. The same method of operation applies when permanent magnets are placed in the stator and electromagnetic coils are mounted on the rotor.

In accordance with this aspect of the present invention, switching magnets may be used in the stator in place of steel cores in the coils. A switching magnet, as described above, is a magnet whose polarity can be reversed by the application of a strong magnetic field thereto and whose polarity and magnetic flux are restored to their original value upon removal of the magnetic field.

## BRIEF DESCRIPTION OF DRAWINGS

Figure 1 is a series of hysteresis curves for magnet compositions both with and without added quantities of chromium oxide;

Figure 2 is a plot showing the effect of addition of chromium oxide to strontium hexaferrite on intrinsic coercive force (Hci) and residual magnetism (Br);

Figure 3 is a hysteresis curve comparing the magnetic properties of a magnet composition in accordance with the invention and a commercial magnet composition;

Figure 4 is a plot of the effect of a demagnetizing field on Br and Hc for a sample high coercive force magnet of the invention;

Figure 5 is a plot of the relationship of second and third quadrant values for a high coercive force magnet of the invention;

Figure 6 is a schematic end elevational view of a drum-type permanent magnet motor constructed in accordance with one embodiment of the invention;

Figure 7 is a schematic side elevational view of the drum-type permanent magnet motor of Figure 6; and

Figure 8 is a schematic and elevational view of a drum-type permanent magnet motor constructed in accordance with another embodiment of the invention.

## GENERAL DESCRIPTION OF INVENTION

The novel magnetic materials of the invention preferably are formed by mixing the desired amount of chromic oxide with an already-constituted strontium hexaferrite. The mixture of chromium oxide and ferrite is ground to form an intimate particulate admixture, formed into a magnet shape and fired at about 1150$^\circ$ to about 1350$^\circ$ C, preferably around 1250$^\circ$ C.

Chemical combination between the chromium oxide and the strontium hexaferrite takes place at the high temperature to produce a new compound having a crystal structure different from strontium hexaferrite. The result is a highly-strained crystal lattice with a very high intristic coercive force.

The new compound has the formula $(Fe_{0.6} + Cr_{0.4})_2O_3$ having an octagonal corundum type crystal which does not fit the hexagonal spinel-type crystal of the hexaferrite, and is detectable by x-ray diffraction analysis.

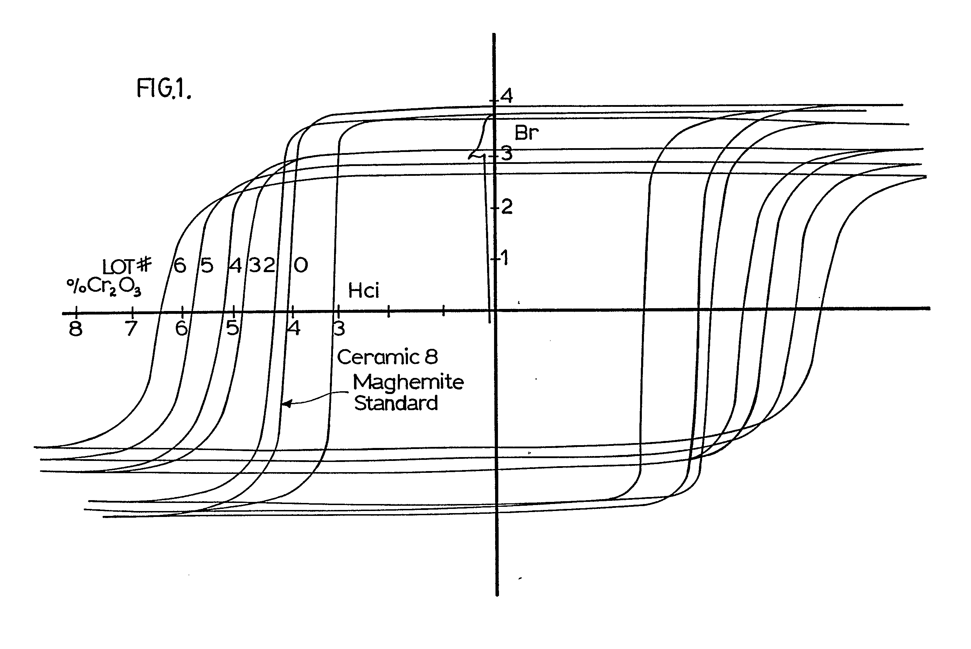

The novel nature of the magnetic material of the invention can be seen from Figures 1 to 5 of the accompanying drawings. In Figure 1, the hysteresis curves for various ferrite magnets are shown. The best ceramic ferrite magnet currently on the market is "Ceramic 8" which is plotted for reference purposes.

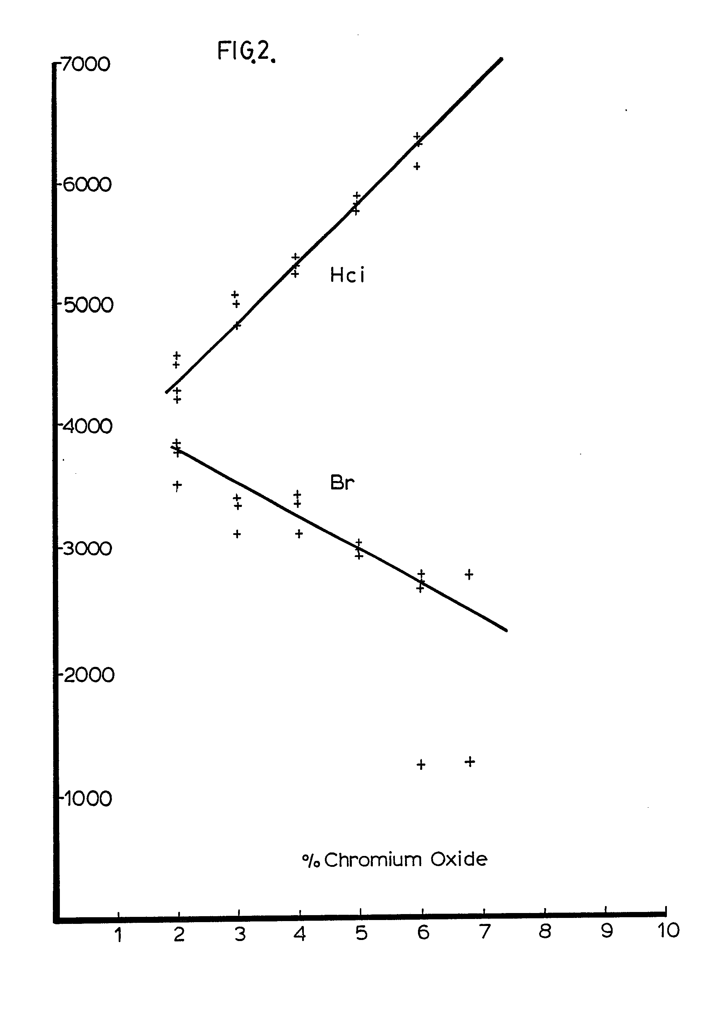

Our standard strontium hexaferrite production (0% $Cr_2O_3$) shows residual magnetism (Br) of 4000 gauss and an intrinsic coercive force (Hci) of 4000 oersteds. Additions of chromium oxide increases the intrinsic coercive force, and hence the difficulty of demagnetization and at 6% $Cr_2O_3$, the Hci is more than twice the value for Ceramic 8. As may be seen more clearly from Figure 2, the gain in Hci is obtained for a lesser degree of loss of Br.

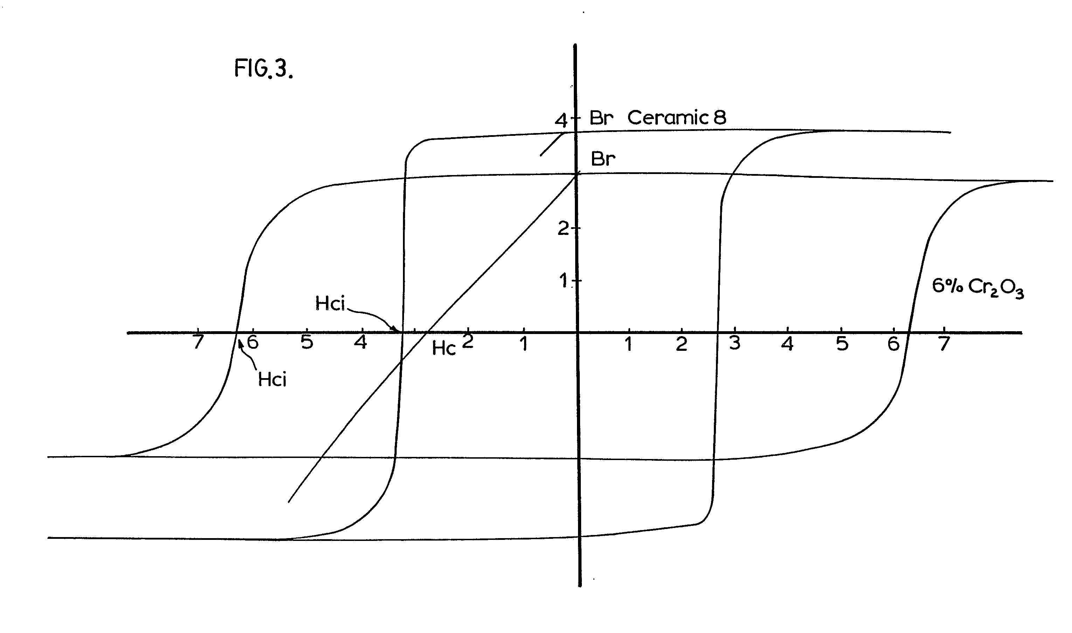

In Figure 3, the hysteresis curves for Ceramic 8 and for the 6% $Cr_2O_3$ added sample are plotted and to which has been added the demagnetization line in the second quadrant (Br-Hc) for the chromium oxide-containing sample. The demagnetization line is that along which the characteristics of the magnet and its stored energy move when the magnet is operating in a motor. The sample has a 3000 Br and a 2800 Hc value.

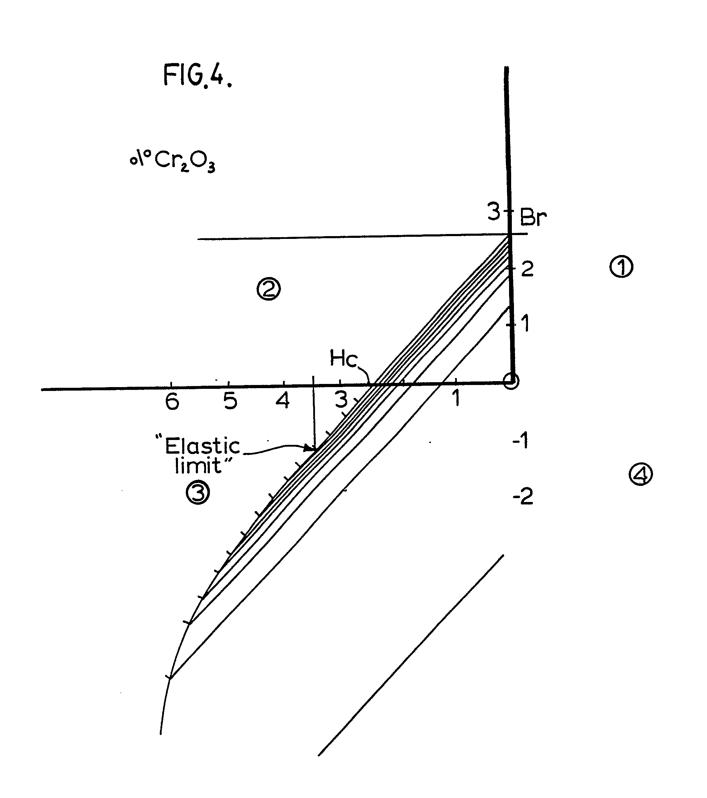

Figure 4 is a series of demagnetization curves for the 6% $Cr_2O_3$ added sample, showing the effect of increasing levels of demagnetization. As may be seen, the demagnetization curves extend into the third quadrant, meaning that the magnetic field of the magnet has gone through zero and has been reversed. The original strength and polarity of the field of the magnet are restored upon removal of the demagnetizing field, provided that the "elastic limit" of the magnet is not exceeded. The "elastic limit" is the point beyond which application of magnetic field permanently decreases the field of the permanent magnet after removal of the field. For the sample tested, the elastic limit appears to be about 3750 oersteds.

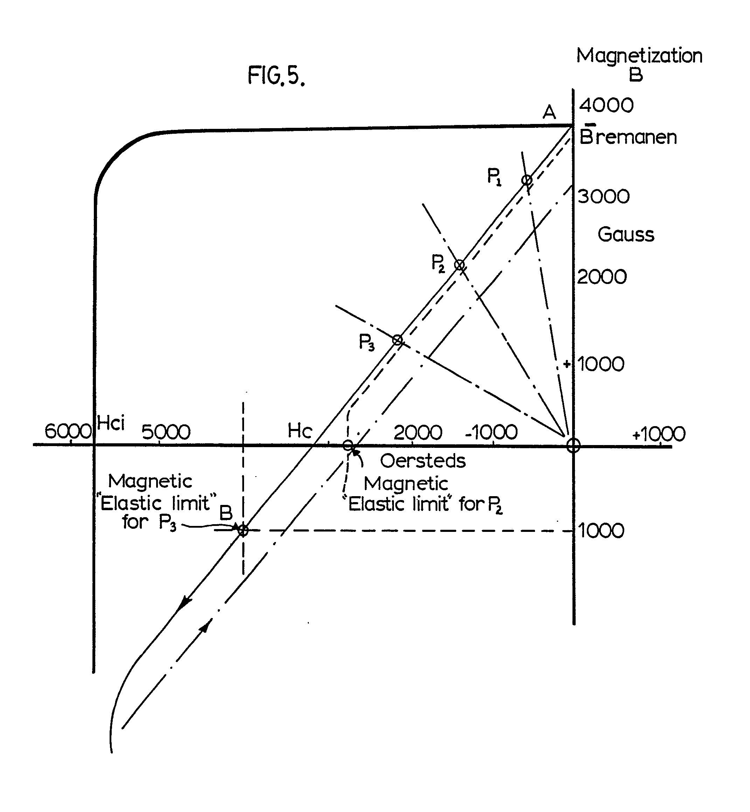

Figure 5 shows the demagnetization line for the 6% $Cr_2O_3$ added sample. In designing a permanent magnet motor, point $P_1$ first is chosen by determining the minimum gap between rotor and stator magnets, and, therefore, the maximum operating magnetic flux.

As a negative demagnetizing field is applied, the magnetic flux is decreased along the line AB. A usual point of maximum demagnetization, for most ceramic magnets could be at point $P_2$. When a demagnetizing field is removed, (as the motor rotor turns), most of the stored energy in the magnet is recovered and it returns to its initial condition of magnetization $P_1$. The available energy in the form of torque applied to the rotor of the motor, is proportional to the area of the triangle $P_1P_2O$.

If demagnetization is increased beyond a certain level, the magnet will not return to its original condition when the field is removed, but rather will be slightly demagnetized. Ceramic permanent magnets are significantly demagnetized at field levels below 3000 oersteds.

To avoid demagnetization, point $P_2$ usually is chosen to be about one half the value of the demagnetizing field H at the point where the magnetic field B becomes 0.

In the example shown in Figure 5, the point where significant demagnetization occurs has been extended into the 3rd quadrant of the hysteresis loop as a result of addition of $Cr_2O_3$. As shown in this figure, point $P_2$ can now be chosen as about one half of this "elastic limit" of 4000 oersteds to give a point $P_3$, which suggests that the triangle $P_1P_3O$, as operating points, may be used to develop about twice the available torque in a motor compared to ceramic 8 ferrite magnets now in general use.

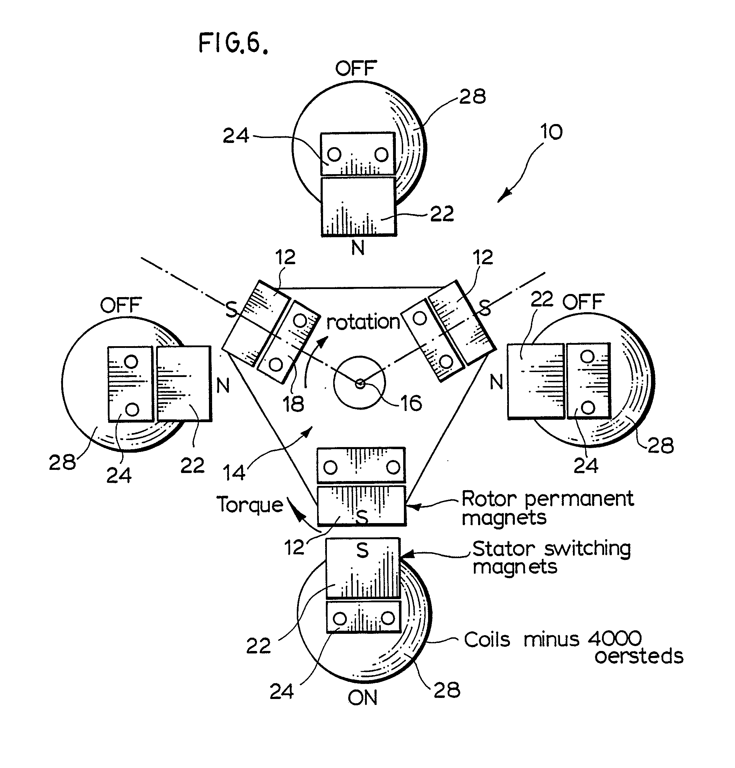

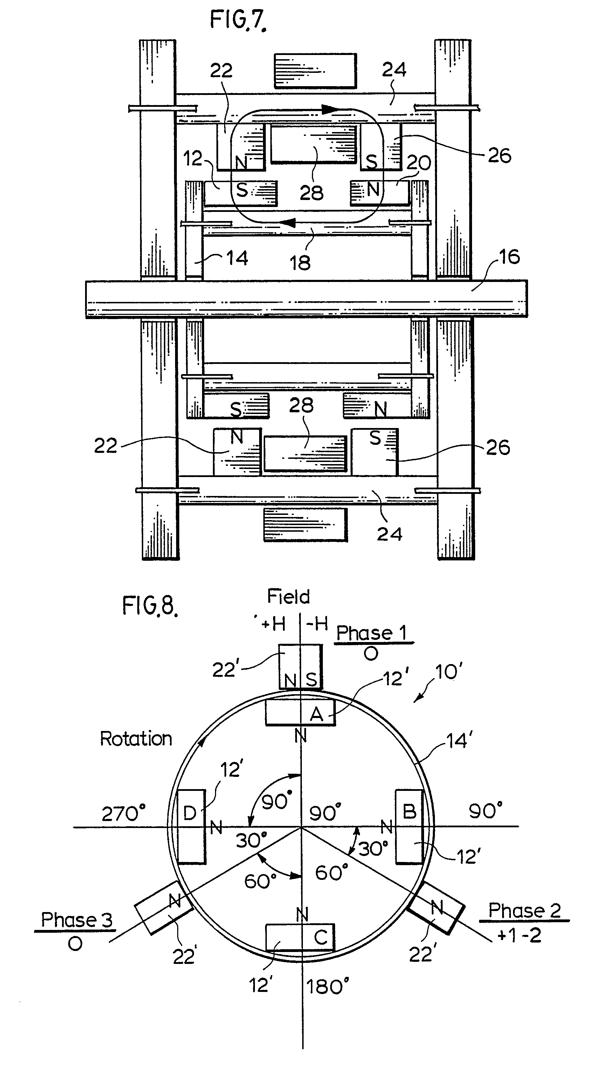

The motor aspect of the invention may be configured as a toroid motor, as described in our U.S. Patent No. 4,605,874, described above, having a rotor spaced apart from and coaxial with a stator. The rotor is formed of permanent magnet ferrite material with an even number of, preferably, same polarity poles arranged in a torus. Any convenient number of such rotor poles may be provided, for example, six. Switching magnets are arranged on the stator with an even number of poles of, preferably, same polarity but opposite to the polarity of the rotor poles, of the same number or a multiple of the number of poles on the rotor, for example, six or twelve. Alternatively, the motor may be configured as a drum-type. One example of a drum-type motor constructed in accordance with this aspect of the invention is shown in Figures 6 and 7 while another example is shown in Figure 8, as described in more detail below.

Associated with each stator pole is a demagnetizing electromagnetic coil which, when energized to provide a sufficient demagnetizing force on the stator pole switching magnet, decreases the strength of the stator pole magnetic field to zero and then reverses the stator pole polarity, and which, when deenergized to zero demagnetizing force, allows the stator pole to be restored to its original field strength and polarity.

With the rotor poles all of the same polarity and the stator poles normally all of the opposite polarity, the rotor poles are attracted to the stator poles. When a rotor magnet is centered on a stator switching magnet, the rotor magnet is at the maximum energy of attraction. At this point, a very short pulse of the demagnetizing field is applied by energizing the electromagnet, which then reverses the polarity of the stator magnet, thereby repelling the rotor magnet. Separate pulse units may be employed to provide a stator magnet attracting each rotor magnet while the preceding stator magnet repulses the rotor magnet as it is switched.

A small demagnetizing field, for example, minus 50 oersteds, may be maintained at all times by a suitable permanent magnet associated with the switching magnet. When a pulse of, say, over minus 3000 oersteds is applied momentarily, the switching magnet switches polarity.

The timing and duration of the pulses applied to the switchable magnets may be provided in any convenient manner, such as commutators, magnetic hall switches, optical switches or similar devices widely used for timing pulses by determining rotor position.

This arrangement of switching magnets and permanent magnets provides a simple yet extremely effective d.c. permanent magnet motor in which control is considerably simplified and the problems of large transient currents and associated magnetic fields are avoided.

## DESCRIPTION OF PREFERRED EMBODIMENT

Referring to Figures 6 and 7, there is shown therein one embodiment of a drum-type motor 10, having permanent magnets 12 of the rotor 14 all of the same polarity. The rotor 14 is mounted for rotation about a horizontal axle 16. The magnetic circuit of the rotor poles 12 is completed by a steel bridge 18 to another magnet 20 of opposite polarity on another circumference (Figure 7). Arranged outside the arc of the circle of rotation of the rotor 14 are four stator permanent magnets 22 normally of opposite polarity to the adjacent rotor poles 12. Again, the magnetic circuit for the stator poles 22 is completed by a steel bridge 24 to another magnet 26 adjacent to the rotor poles 20.

The steel bridges 24 are provided as cores for stator coils 28. The permanent magnets 22 and 26 are switchable to an opposite polarity by activation of the coils 28, as may be seen for the magnet 22 at the 6 o'clock position in Figure 6.

In the illustrated arrangement, with three rotor magnets 12, 20 arranged in a triangular array and four stator switchable magnets 22, 26 provided in a square array, only one of the stator poles 22, 26 is switched in polarity as a rotor pole 12, 20 aligns with the pole after attraction thereto by the normal opposite polarity of the stator pole 22, 26. Energization of the coil 28 (6 o'clock coil) reverses the polarity of the stator poles 22, 26, causing repulsion of the rotor magnet 12, 20. The momentum imparted to the rotor moves the rotor pole towards the next stator pole to which it is attracted by the opposite polarity and the process is repeated.

Turning now to Figure 8, there is illustrated a form of drum motor 10' which employs three switchable magnets 22' arranged in a triangular array outside a drum rotor 14' on which four, eight or higher multiples of four numbers of rotor permanent magnets 12' are mounted.

The energizing of the three stator switching magnets may be effected by three-phase 60 cycle current, which provides a synchronous motor operating at 900 rpm for a four pole rotor. No switches, commutator, pulse timing devices or switching transients are required for this embodiement.

The coil field on the switching magnets may be employed to aid the switching magnet field and may increase it by 50% or more. In the negative portion of the cycle of each phase, the net flux is the difference between the switching permanent magnet flux and the flux generated by the coil. The decrease in torque developed during this phase of the cycle is not as great as the increase in torque provided by the coils on the positive portion of the cycle.

When the negative magnetic field generated by the coil exceeds the value that causes the switching magnet to reverse its polarity, then the stator magnet strongly repels its matching rotor magnet, as the switching magnet flux is forced below zero and into the 3rd quadrant of the hysteresis loop.

## SUMMARY OF DISCLOSURE

In summary of this disclosure, the present invention is concerned with new magnet compositions having unexpected properties which open up new applications of permanent magnets and, in particular, as switching devices in motors. Modifications are possible within the scope of this invention.

**Claims**

1. A magnet ferrite magnet composition, characterized by a magnetizable metal ferrite distributed therein in sufficient quantity to permit reversal of the polarity thereof upon application of a sufficiently strong magnetic field thereto and restoration of the same polarity without any significant loss of field strength upon removal of said magnetic field.

2. The composition claimed in claim 1, characterized in that the magnetizable ferrite is strontium hexaferrite.

3. The composition claimed in claim 2, characterized in that the magnetizable metal ferrite is strontium chromium ferrite.

4. The composition claimed in claim 3, characterized in that the strontium chromium ferrite is produced by incorporating about 2 to about 6 wt.% $Cr_2O_3$ into strontium hexaferrite.

5. The composition claimed in claim 4, characterized in that the magnet composition is formed by mixing the chromium oxide with strontium hexaferrite, grinding the mixture to form an intimate particulate admixture, forming the admixture into the desired shape and firing the shape at about 1150° to about 1350°C to effect chemical reaction between the chromium oxide and strontium hexaferrite to produce strontium chromium ferrite having an octagonal corundum-type crystal lattice.

6. An electric motor, characterized by a plurality of permanent magnets of fixed polarity mounted on one of a rotor or stator and a plurality of permanent magnets of reversible polarity formed of a magnet composition as claimed in any one of claims 1 to 5 and mounted on the other of the rotor or stator and arranged to interact with the fixed polarity permanent magnets to achieve rotational movement of the rotor with respect to the stator by alternate attraction and repulsion of the permanent magnets of fixed polarity and those of reversible polarity.

7. The electric motor claimed in claim 6 characterized in that an even number of poles of fixed-polarity permanent magnet hard ferrite material having the same polarity are arranged in a rotor disk, an even number of poles of reversible-polarity permanent magnets having the same polarity but opposite to the polarity of the rotor poles arranged in a stator disk, the stator poles being the same number as or a multiple of the number of the rotor poles, and a demagnetizing electrical coil associated with each stator pole for the purpose, when d.c. energized, of providing sufficient demagnetizing force on the stator pole reversible-polarity magnet to reverse the stator pole polarity and, when deenergized, of allowing the stator pole to be restored to its original field strengthen and polarity.

8. The electric motor claimed in claim 6, characterized in that an elongate rotor comprises equicircumferentially spaced rotor magnets each comprising an elongate steel bar having fixed-polarity permanent magnets of opposite polarity at each end thereof and an elongate stator surrounding said rotor and comprising equi-circumferentially spaced stator magnets each comprising an elongate steel bar having permanent reversible-polarity magnets of opposite polarity at each end thereof, the reversible-polarity magnets normally having a polarity opposite to that of the adjacent rotor pole, and an electrical coil mounted on the steel bar for reversing the polarity of the reversible-polarity magnets upon energization thereof.

9. The electric motor claimed in claim 8, characterized in that the rotor magnets (12, 20) are three in number arranged in a triangular array, the stator reversible-polarity magnets (24, 26) are four in number arranged in a square array and only one of the stator poles (24, 26) is switched in polarity at one time as a rotor pole (12, 20) aligns with the stator pole (24, 26) after attraction thereto by the normal opposite polarity of the stator pole (22, 24).

10. The electric motor claimed in claim 9, characterized in that the rotor magnets (12') are four in number arranged in a square array, the stator reversible-polarity magnets (22') are three in number arranged in a triangular array and the stator poles (22') are switched in polarity by a three-phase alternating current.

FIG.1.

LOT# 6 5 4 32 0

%Cr₂O₃

Hci

Br

Ceramic 8
Maghemite
Standard

8 7 6 5 4 3

4
3
2
1

EP 0 310 223 A1

FIG.2.

% Chromium Oxide

FIG.3.

Br Ceramic 8

Br

6% Cr$_2$O$_3$

Hci

Hc

Hci

EP 0 310 223 A1

FIG.4.

EP 0 310 223 A1

FIG.5.

# FIG.6.

OFF

24 28

10

22

N

12 12

OFF 22 OFF

S S

rotation

N N

18 16

28 28

24 24

22 24

14

Rotor permanent
magnets

Torque

S

12 Stator switching
magnets

S

22

Coils minus 4000
oersteds

24 28

ON

FIG.7.

FIG.8.

## DOCUMENTS CONSIDERED TO BE RELEVANT

EP 88306823.1

| Category | Citation of document with indication, where appropriate, of relevant passages | Relevant to claim | CLASSIFICATION OF THE APPLICATION (Int. Cl.4) |
|---|---|---|---|
| D,A | US - A - 2 762 778 (GORTER) <br> * Totality * | 1-10 | H 01 F 1/10 |
| D,A | US - A - 4 565 726 (OGUCHI) <br> * Abstract; claims 1-9 * | 1-10 | |
| D,A | US - A - 4 605 874 (WHITELEY) <br> * Abstract; claim 1 * | 1-10 | |
| D,A | US - A - 4 409 576 (PETERSEN) <br> * Abstract; claims 1-12 * | 1-10 | |
| A | DE - A - 2 149 698 (COCHARDT) <br> * Abstract; claims 1-20 * | 1-5 | |
| A | DE - A1 - 3 021 396 (PHILIPS) <br> * Totality * | 1-10 | |
| A | US - A - 4 713 877 (ABBOTT) <br> * Abstract; claims 1-8 * | 1 | |

TECHNICAL FIELDS SEARCHED (Int. Cl.4)

H 01 F 1/00
H 01 F 41/00
G 11 B 5/00
H 02 K 1/00
H 02 K 15/00
H 01 H 9/00

The present search report has been drawn up for all claims

| Place of search | Date of completion of the search | Examiner |
|---|---|---|
| VIENNA | 14-11-1988 | VAKIL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82